# EUROPÄISCHE PATENTANMELDUNG

(11) **EP 0 572 065 A2**
(43) Veröffentlichungstag der Anmeldung: **01.12.1993**
(21) Anmeldenummer: 93201416.0
(22) Anmeldetag: 18.05.1993
(51) Int. Cl.: G11B 17/04, G11B 33/02

(54) **Elektrisches Informationsgerät mit einem Laufwerk**

(30) Priorität: 26.05.1992 DE 4217397
(71) Anmelder: Philips Patentverwaltung GmbH, 22335 Hamburg (DE); Philips Electronics N.V., 5621 BA Eindhoven (NL)
(72) Erfinder: van Alfen, Maarten, NL-3818 LM Amersfoort (NL)
(74) Vertreter: von Laue, Hanns-Ulrich, Dipl.-Ing.

(57) **Zusammenfassung**

Die Erfindung bezieht sich auf ein elektrisches Informationsgerät mit einem Laufwerk für Informationsträger in Form umlauffähiger Platten (15), insbesondere CD-Platten, das mit einem dem Spielen der Platten (15) dienenden Betriebsraum (21) versehen ist, in den die Platten (15) längs der Plattenebene ein- und ausführbar sind durch eine den Betriebsraum (21) nach außen begrenzende Schlitzöffnung (3), die mit Hilfe von beweglichen Schließmitteln verschließbar ist, wobei die Schließmittel (9a, 9b, 31) als Verdrängungssegmente ausgebildet sind, die senkrecht zur Plattenebene und zur Längsrichtung der Schlitzöffnung verstellbar sind, wobei die Ränder der Schlitzöffnung (3) und eine Verddrängungskante (9e) der Verdrängungssegmente so zusammenwirken, daß im wesentlichen immer nur der Randbereich der Platte (15), wenn diese die Verdrängungssegmente passiert, mit dem Öffnungsrand und der Verdrängungskante der Verdrängungselemente, die beim Passiervorgang ausweichen, in Berührung kommt.

## Beschreibung

Die Erfindung bezieht sich auf ein elektrisches Informationsgerät mit einem Laufwerk für Informationsträger in Form umlauffähiger Platten, insbesondere CD-Platten, das mit einem dem Spielen der Platten dienenden Betriebsraum versehen ist, in den die Platten längs der Plattenebene ein- und Ausführbar sind durch eine den Betriebsraum nach außen begrenzende Schlitzöffnung, die mit Hilfe von beweglichen Schließmitteln verschließbar ist.

Ein derartiges elektrisches Informationsgerät ist aus der EP 183 672 A2 bekannt. Die Schließmittel zum Verschließen der Öffnung bestehen dabei aus einer Walze, die mittels Federspannung in einer vorbestimmten Drehlage gehalten ist. Die Walze ist mit Schrägflächen versehen, über die die Walze, wenn eine Platte längs ihrer Plattenebene in die schlitzartige Öffnung eingeschoben wird, gegen die Federvorspannung so verdreht wird, daß die Platte in den Betriebsraum einschiebbar ist. Sobald die Platte die schlitzartige Öffnung und die Walze passiert hat, dreht diese wieder in ihre Ausgangslage zurück und verschließt die schlitzartige Öffnung. Wird die Platte wieder ausgeschoben werden, dann stößt sie gegen eine andere Schrägfläche der Walze und verschwenkt die Walze so, daß die Platte durch die schlitzartige Öffnung ausfahrbar ist. Hat die Platte die Walze passiert, dann schwenkt die Feder die Walze wieder in ihre Schließstellung.

Bei dieser Konstruktion fährt die Platte mit ihrer ganzen Oberfläche an der geschwenkten Walze entlang. Dies kann ein Anlaß für Oberflächenbeschädigungen sein.

Es ist Aufgabe der Erfindung, ein elektrisches Informationsgerät der eingangs erwähnten Art zu schaffen, bei dem die schlitzartige Öffnung mittels Schließmitteln zwar verschließbar ist, die Plattenoberfläche aber während der Plattenbewegung gegenüber den Schließmitteln keine Berührung mit den Schließmitteln oder anderen Bauteilen hat.

Die gestellte Aufgabe ist erfindungsgemäß dadurch gelöst, daß die Schließmittel als Verdrängungssegmente ausgebildet sind, die senkrecht zur Plattenebene und zur Längsrichtung der Schlitzöffnung verstellbar sind, wobei die Ränder der Schlitzöffnung und eine Verdrängungskante der Verdrängungssegmente so zusammenwirken, daß im wesentlichen immer nur der Randbereich der Platte, wenn diese die Verdrängungssegmente passiert, mit dem Öffnungsrand und der Verdrängungskante der Verdrängungselemente, die beim Passiervorgang ausweichen, in Berührung kommt.

Die Schließmittel werden dabei nur vom Rand der Platte betätigt. Die Plattenoberfläche wird von dem Schließmittel nicht berührt. Dies führt trotz Vorhandenseins eines Schließmittels zu einer Schonung der Platte.

Nach einer weiteren Ausgestaltung der Erfindung ist vorgesehen, daß wenigstens die Schlitzränder und eine der Verdrängungskanten der Schließmittel, zwischen die und die Verdrängungskanten sich der Plattenrand schiebt, die im Zusammenwirken eine gewölbte, bombierte Form aufweisen. Dadurch wird die bevorzugte Randberührung gefördert.

Nach einer weiteren Ausgestaltung der Erfindung ist vorgesehen, daß die Schließmittel aus türflügelartigen Klappen bestehen, die, in Längsrichtung der schlitzartigen Öffnung gesehen, beiderseits und außerhalb der Öffnungsenden derart verschwenkbar gelagert sind, daß sie von den Randbereichen der Platte, wenn diese bei Ein- und Ausschiebevorgängen die Schlitzöffnung passieren, zwischen einer die Schlitzöffnung freigebenden Stellung und einer diese verschließenden Stellung verschwenkbar sind. Die Schließmittel entsprechen damit einer verdrängbaren Zweiflügeltür.

Nach einer weiteren Ausgestaltung der Erfindung ist vorgesehen, daß die Schließmittel aus einem Schieber bestehen, der wenigstens beiderseits und außerhalb der Öffnungsenden geführt und quer zur Schlitzöffnung derart verstellbar ist, daß er von den Randbereich der Platte, wenn diese bei Ein- und Ausschiebevorgängen die Schlitzöffnung passieren, zwischen einer die Schlitzöffnung freigebenden Stellung und einer diese schließenden Stellung verschiebbar ist. Die Schließmittel entsprechen damit einem verdrängbaren Schieber.

Nach einer weiteren Ausgestaltung der Erfindung ist vorgesehen, daß die Schließmittel in Schließrichtung federbelastet sind. Die Schließmittel verstellen sich damit also nur unter dem Einfluß des Randes der durch die Schlitzöffnung hindurchgeführten Platten.

Nach einer weiteren Ausgestaltung der Erfindung ist vorgesehen, daß die Schließmittel in Längsrichtung auf den zur Öffnung hin gelegenen Seiten mit Verdrängungsflächen versehen sind, die keilförmig zu einer Verdrängungskante zulaufend ausgebildet sind, damit die Plattenränder die Schließmittel verdrängen, bis diese auf die Verdrängungskante aufgelaufen sind und beim weiteren Verschieben der Platte nur noch die Verdrängungskanten mit den Plattenrändern in Berührung sind und die Schließmittel über die Verdrängungskanten weiter verstellt werden. Damit drücken die durch den Schlitz geführten Platten die Schließmittel sicher beiseite.

Nach einer weiteren Ausgestaltung der Erfindung ist vorgesehen, daß die Verdrängungskante des Schiebers der nach unten gewölbten Form des unteren Schlitzrandes angepaßt ist, zwischen den und die Verdränungskante sich die Plattenränder schieben. Dadurch laufen die Plattenränder gut auf der Verdrängungskante ab.

Nach einer weiteren Ausgestaltung der Erfindung ist vorgesehen, daß die freien Enden der Klappen mit einer wenigstens in Schließstellung ineinander greifenden Verzahnung versehen sind. Auch bei einem schiefen Einschieben einer Platte werden beide Klappen verstellt, um vorzubeugen, daß nicht eine der Klappen die Plattenoberfläche beschädigen kann.

Nach einer weiteren Ausgestaltung der Erfindung ist vorgesehen, daß die Klappen quer zur Einschubebene der Platten in einem Führungsschlitz des die Schlitzöffnung aufweisenden Frontteiles des Laufwerkes oder Gerätes geführt sind. Damit sind die Klappen sicher geführt.

Die Erfindung wird anhand der Zeichnung näher erläutert.
Es zeigen:
Fig. 1 die Anordnung von Schließmitteln in Form von Klappen zum Verschließen einer Schlitzöffnung an dem Laufwerk eines elektrischen Informationsgerätes für Informationsträgerplatten, wobei sich in der Öffnung keine Platte befindet und wobei sich die Schließmittel hinter einer sie abdeckenden Vorderwand befinden.
Fig. 2 einen Schnitt durch die Darstellung nach Fig. 1 längs der Linie II-II,
Fig. 3 die Anordnung nach Fig. 1 in einem Zustand, wo sich in dem Schlitz eine Platte befindet, die die Schließmittel beiseite drückt, wobei die Schließmittel durch Entfernen der davor gelegenen Teile freigelegt sind
Fig. 4 die Anordnung von Schließmitteln in Form eines Schiebers zum Verschließen einer Schlitzöffnung an dem Laufwerk eines elektrischen Informationsgerätes für Informationsträgerplatten, wobei sich in der Öffnung keine Platte befindet und wobei sich die Schließmittel hinter einer sie abdeckenden Vorderwand befinden,
Fig. 5 einen Schnitt durch die Darstellung nach Fig. 4 längs der Linie V-V,
Fig. 6 die Anordnung nach Fig. 4 bei in der Schlitzöffnung befindlicher CD-Platte,
Fig. 7 einen Schnitt durch die Anordnung nach Fig. 6 längs der Linie VII-VII.

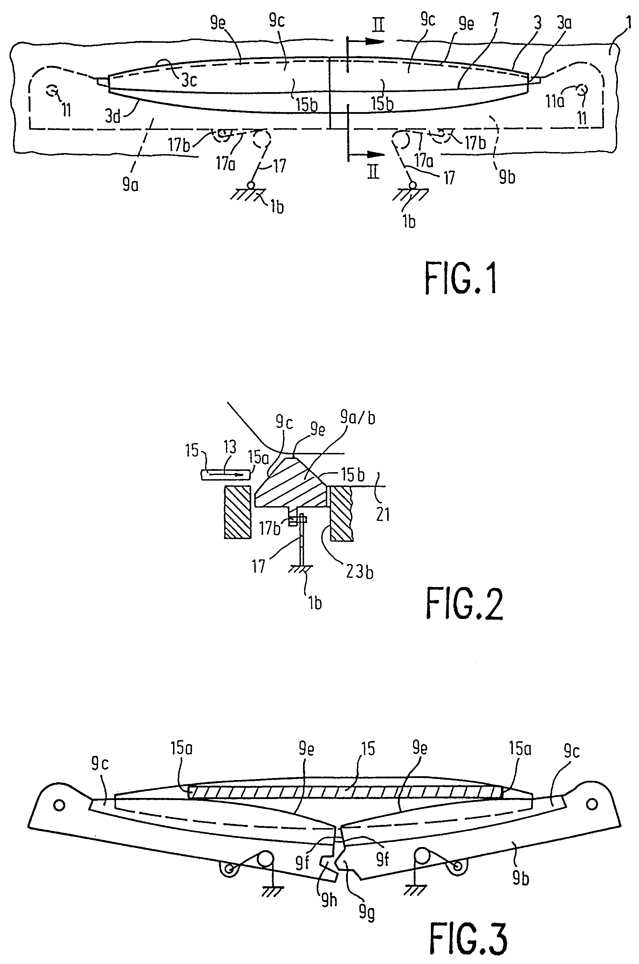

Fig. 1 zeigt einen Teil eines Frontteiles, einer Frontblende eines elektrischen Informationsgerätes, wie es beispielsweise als Autoradio für den Einbau in ein Armaturenbrett oder in ein Konsolenteil eines Kraftfahrzeuges geeignet ist. Die Frontblende ist wesentlich umfangreicher und weist u. a. einen oder mehrere Bedienungsknöpfe auf. In Fig. 1 ist nur ein Ausschnitt 1 dieser Frontblende dargestellt, in deren Bereich sich eine Schlitzöffnung 3 befindet, durch die eine Informationsträgerplatte, beispielsweise eine CD-Platte, in den Betriebsraum eines CD-Spielers einschiebbar ist. Diese Schlitzöffnung 3 ist, solange sich im Bereich des Schlitzes 7 keine CD-Platte befindet, mittels türflügelartiger Klappen 9a, 9b verschlossen. Diese türflügelartigen Klappen sind beiderseits außerhalb der Schlitzöffnungsenden 3a in Drehlagern gelagert. Die Lagerachsen 11a verlaufen dabei senkrecht zur Zeichenebene und in Einschubrichtung 13 einer CD-Platte 15 (Fig. 2).

Die Klappen 9a und 9b weisen Verdrängungsflächen 9c auf, gegen die ein Plattenrand 15a auflaufen kann. Die Klappen 9a und 9b werden mit Hilfe von Schenkelfedern 17 in ihre in Fig. 1 dargestellte Schließstellung gedrängt. Die Schenkelfedern greifen dazu mit einem Schenkel 17a jeweils an einem Ohr 17b an der jeweiligen Klappe 9a oder 9b an und stützen sich geräteseitig an Widerlagern 1b ab. Wird nun eine CD-Platte 15 in Richtung des Pfeiles 17 in Richtung auf die Öffnung 3 geschoben, dann drückt der Plattenrand 15a die Klappen 9a und 9b gegen den Federdruck nach unten, bis er auf die Stellkante 9e aufläuft.

Die Stellkante 9e der jeweiligen Klappe 9a und 9b ist nach außen gewölbt, so daß sie, wie aus Fig. 1 zu ersehen ist, der gewölbten, bombierten Form des oberen Schlitzrandes 3c angepaßt ist. Auch der untere Schlitzrand 3d ist entsprechend nach außen gewölbt bombiert.

Die gegenseitige bombierte gewölbte Form von Verdrängungskante 9e und Öffnungsrand 3c führt dazu, daß beim Einschieben einer CD-Platte 15 nur deren Rand 15a Berührung mit der jeweiligen Verdrängungskante 9e und dem oberen Öffnungsrand 3c kommt. Die dazwischen liegenden Plattenteile werden von der Anordnung der Schließmittel und deren Bewegung nicht beeinflußt.

Fig. 3 zeigt deutlich, wie die CD-Platte 15 über ihren Rand 15a die Klappen 9a und 9b verschwenkt. Ist die Platte vollständig in den Betriebsraum 21 des Gerätes eingeschoben, dann drücken die Federn 17 die Klappen 9a, 9b wieder in die Schließstellung nach Fig. 1. Wird die CD-Platte ausgeschoben, dann drückt diese gegen die hinteren Verdrängungsflächen 15b und drängt die Klappen 9a und 9b beiseite, bis die CD-Platte 15 vollständig ausgeschoben ist. Die Klappen 9a, 9b nehmen dann wieder ihre Schließstellung ein. Die Wirkung der Federn 17 ist in der Weise degressiv, daß ihre Kraft bei geschlossenen Klappen 9a, 9b am größten ist. Damit wird ein Klappern vermieden.

Die Klappen 9a und 9b sind zwischen Führungswänden 23a, 23b einer Führung 23 im Frontteil 1 geführt, so daß sie von der gegen sie drückenden Platte nicht aus ihrer Funktionsrichtung herausgedrückt werden können.

Die Klappen 9a und 9b sind an ihren freien Enden 9f mit einer in Schließstellung ineinander vergreifenden Verzahnung, bestehend aus einem Zahn 9g und einer Zahnlücke 9h, versehen. Auch bei einem schiefen Einschieben einer Platte werden beide Klappen verstellt, um vorzubeugen, daß nicht eine der Klappen die Plattenoberfläche beschädigen kann.

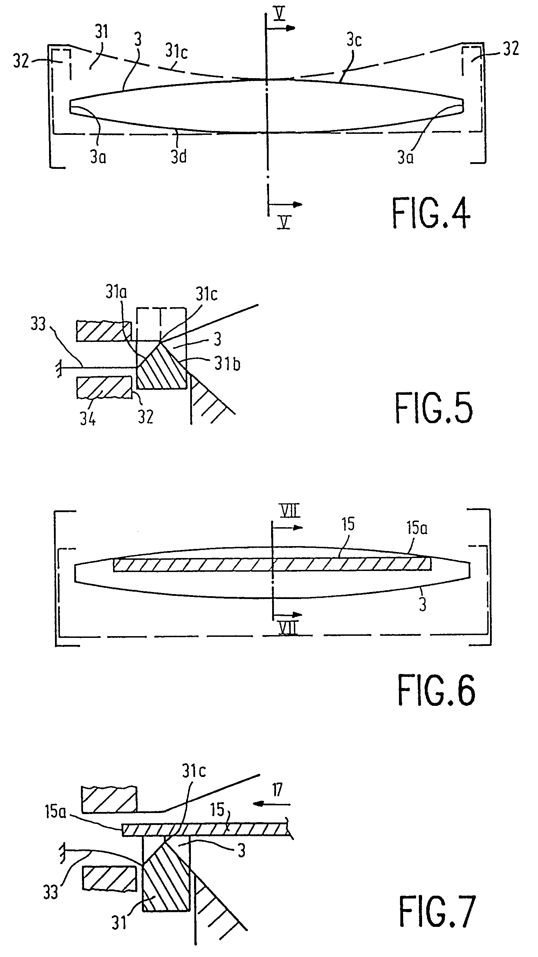

Fig. 4 bis 7 zeigen eine andere Ausführungsform der Erfindung, bei der die Schlitzöffnung 3 mittels eines Schiebers 31 verschließbar ist. Dieser Schieber 31 ist beiderseits und außerhalb der Schlitzöffnungsenden 3a in Nuten 32 verschiebbar gelagert. Die Nuten 32 verlaufen parallel zur Zeichenebene.

Der Schieber 31 ist mit Verdrängungsflächen 31a und 31b (Fig. 5) versehen, die sich auf seiner Vorder- und Rückseite konisch einer als Scheitel ausgebildeten Verdrängungskante 31c nähern. Der Schieber 31 ist beispielsweise an in Fig. 5 dargestellten Blattfedern aufgehängt. Die Blattfedern können im Bereich der Frontblende am Gerätegehäuse 34 abgestützt sein.

Wird eine CD-Platte 15 in Richtung eines Pfeiles 17 in die Schlitzöffnung 3 eingeschoben (Fig. 6 und 7), dann drückt der Plattenrand 15a den Schieber 31 gegen den Federdruck nach unten, bis der Plattenrand 15a über die Verdrängungskante 31c hinweg läuft.

Die Verdrängungskante 31c des Schiebers 31 ist, wie am deutlichsten Fig. 4 und 6 zeigen, nach unten gewölbt, wobei die Wölbung dem unteren Schlitzrand 3d entsprechen kann.

Die bombierte Form von Verdrängungskante 31c und oberem Schlitzrand 3c führen dazu, daß beim Einschieben einer CD-Platte 15 nur deren Rand 15a mit der jeweiligen Verdrängungskante 31c in Berührung kommt. Die dazwischen liegenden Plattenteile werden vom Schieber und dessen Bewegung nicht beeinflußt. Dies ist anhand von Fig. 6 deutlich zu erkennen.

Bei der Darstellung nach Fig. 7 ist ebenso wie bei der nach Fig. 6 eine CD-Platte teilweise eingeschoben und befindet sich damit in der Schlitzöffnung 3. Man erkennt, daß der Schieber 31 teilweise niedergedrückt ist und die Platte 15 im Schnittbereich die Verdrängungskante 31c nicht berührt.

## Patentansprüche

1. Elektrisches Informationsgerät mit einem Laufwerk für Informationsträger in Form umlauffähiger Platten (15), insbesondere CD-Platten, das mit einem dem Spielen der Platten (15) dienenden Betriebsraum (21) versehen ist, in den die Platten (15) längs der Plattenebene ein- und ausführbar sind durch eine den Betriebsraum (21) nach außen begrenzende Schlitzöffnung (3), die mit Hilfe von beweglichen Schließmitteln verschließbar ist, dadurch gekennzeichnet, daß die Schließmittel (9a, 9b, 31) als Verdrängungssegmente ausgebildet sind, die senkrecht zur Plattenebene und zur Längsrichtung der Schlitzöffnung verstellbar sind, wobei die Ränder der Schlitzöffnung (3) und eine Verddrängungskante (9e) der Verdrängungssegmente so zusammenwirken, daß im wesentlichen immer nur der Randbereich der Platte (15), wenn diese die Verdrängungssegmente passiert, mit dem Öffnungsrand und der Verdrängungskante der Verdrängungselemente, die beim Passiervorgang ausweichen, in Berührung kommt.

2. Elektrisches Informationsgerät nach Anspruch 1, dadurch gekennzeichnet, daß wenigstens die Schlitzränder (3c) und eine Verdrängungskante der Schließmittel, zwischen die und die Verdrängungskanten (9e, 31c) sich der Plattenrand (15a) schiebt, zusammen eine gewölbte, bombierte Form aufweisen.

3. Elektrisches Informationsgerät nach den Ansprüchen 1 und 2, dadurch gekennzeichnet, daß die Schließmittel (9a, 9b) aus türflügelartigen Klappen bestehen, die, in Längsrichtung der schlitzartigen Öffnung (3) gesehen, beiderseits und außerhalb der Schlitzöffnungsenden (3a) derart verschwenkbar gelagert sind, daß sie von den Randbereichen (15a) der Platte (15), wenn diese bei Ein- und Ausschiebevorgängen die Schlitzöffnung (3) passieren, zwischen einer die Schlitzöffnung (3) freigebenden Stellung und einer diese verschließenden Stellung verschwenkbar sind.

4. Elektrisches Informationsgerät nach Anspruch 1 oder 2, dadurch gekennzeichnet, daß die Schließmittel aus einem Schieber (31) bestehen, der wenigstens beiderseits und außerhalb der Schlitzöffnungsenden (3a) geführt und quer zur Schlitzöffnung (3) derart verstellbar ist, daß er von den Randbereichen (15a) der Platte (25), wenn diese bei Ein- und Ausschiebevorgängen die Schlitzöffnung (3) passieren, zwischen einer die Schlitzöffnung (3) freigebenden Stellung und einer diese schließenden Stellung verschiebbar ist.

5. Elektrisches Informationsgerät nach Anspruch 3 oder 4, dadurch gekennzeichnet, daß die Schließmittel (9a, 9b, 31) in Schließrichtung federbelastet sind.

6. Elektrisches Informationsgerät nach Anspruch 3 oder 4, dadurch gekennzeichnet, daß die Schließmittel (9a, 9b, 31a, 31b) in Längsrichtung auf den zur Schlitzöffnung (3) hin gelegenen Seiten mit Verdrängungsflächen (9c, 15b, 31a, 31b) versehen sind, die keilförmig zu einer Verdrängungskante (9e,31c) zulaufend ausgebildet sind, damit die Plattenränder (15a) die Schließmittel (9a, 9b, 31) verdrängen, bis diese auf die Verdrängungskante (9e, 31c) aufgelaufen sind und beim weiteren Verschieben der Platte nur noch die Verdrängungskanten (9e, 31c) mit den Plattenrändern (15a) in Berührung sind und die Schließmitte (9a, 9b, 31) über die Verdrängungskanten (9e, 31c) weiter verstellt werden.

7. Elektrisches Informationsgerät nach einem der Ansprüche 1, 2 oder 4, dadurch gekenzeichnet, daß die Verdrängungskante (31c) des Schiebers (31) der nach unten gewölbten Form des unteren Schlitzrandes (3d) angepaßt ist, zwischen den und die Verdrängungskanten sich die Plattenränder (15) schieben.

8. Elektrisches Informationsgerät nach Anspruch 3, dadurch gekennzeichnet, daß die freien Enden (9f) der Klappen (9a, 9b) mit einer in Schließstellung ineinander greifenden Verzahnung (9f) versehen sind.

9. Elektrisches Informationsgerät nach Anspruch 3 oder 4, dadurch gekennzeichnet, daß die Schließmittel (9a, 9b, 31) quer zur Einschubebene der Platten (15) in Führungsschlitzen (23) des die schlitzartige Öffnung (3) aufweisenden Frontteiles (1) des Laufwerkes oder Gerätes geführt sind.
